# EUROPÄISCHE PATENTSCHRIFT

(11) **EP 1 114 946 B1**
(45) Veröffentlichungstag und Bekanntmachung des Hinweises auf die Patenterteilung: **19.03.2003**
(21) Anmeldenummer: 00126661.8
(22) Anmeldetag: 05.12.2000
(51) Int. Cl.: F16F 9/32

(54) **Zweirohrstossdämpfer**
Twin-tube shock absorber
Amortisseur de choc à deux tubes

(30) Priorität: 05.01.2000 DE 10000179
(43) Veröffentlichungstag der Anmeldung: 11.07.2001
(73) Patentinhaber: ThyssenKrupp Bilstein GmbH, 58256 Ennepetal (DE)
(72) Erfinder: Rehse, Jörg, 58285 Gevelsberg (DE); Sasse, Thomas, Dipl.-Ing., 58256 Ennepetal (DE); Hartig, Ulrich, Dipl.-Ing., 54411 Hermeskeil (DE); Poth, Oliver, Dipl.-Ing., 54316 Holzerath (DE)

(56) Entgegenhaltungen:
- EP-A- 0 653 576
- DE-A- 19 706 627
- FR-A- 1 081 669
- PATENT ABSTRACTS OF JAPAN vol. 007, no. 261 (M-257), 19. November 1983 (1983-11-19) & JP 58 142046 A (ATSUGI JIDOUSHIYA BUHIN KK), 23. August 1983 (1983-08-23)

## Beschreibung

Die Erfindung betrifft einen Stoßdämpfer nach dem Oberbegriff des Anspruchs 1.

Derartige Stoßdämpfer werden bevorzugt zum Dämpfen der Radschwingungen gegenüber einem Kraftfahrzeug eingesetzt. Dabei sind Zweirohrstoßdämpfer mit zwei konzentrisch ineinanderliegenden Rohren ausgebildet, zwischen denen ein Ringraum entsteht. In diesem Ringraum ist üblicherweise ein Gaspolster angeordnet, das dazu dient, der durch die mehr oder minder eintauchenden Kolbenstange verdrängten Stoßdämpferflüssigkeit aufgrund seiner Kompressibilität Raum zu bieten.

Nach der DE-OS 1 750 679 ist es bekannt, das Außenrohr spanlos mit einem Boden auszubilden. Dagegen wird nach der WO 97/16656 der Boden mit dem Außenrohr verschweißt, verklebt oder verlötet.

Nachteilig bedarf es großer baulicher Aufwendungen, das Zylinderrohr exakt zentrisch und sicher geführt gegenüber dem Außenrohr zu fixieren.

Der Erfindung liegt die Aufgabe zugrunde, eine einfache und sichere Anbindung des Zylinderrohrs an das Außenrohr zu finden.

Diese Aufgabe wird erfindungsgemäß mit den Merkmalen des Anspruchs 1 gelöst. Vorteilhafte Aus- und Weiterbildungen sind in den Ansprüchen 2 bis 5 beschrieben.

Die mit der Erfindung erzielten Vorteile bestehen insbesondere darin, daß das Zylinderrohr sicher mit dem Außenrohr verbunden ist. Darüber hinaus wird die Verbindung zwischen Zylinderrohr und Außenrohr wesentlich vereinfacht, was den Fertigungsaufwand beträchtlich reduziert.

Ein Ausführungsbeispiel der Erfindung ist in der Zeichnung dargestellt und wird im folgenden näher beschrieben. Es zeigen
- Fig. 1: einen Schnitt durch einen Zweirohrstoßdämpfer,
- Fig. 2: eine alternative Ausbildung eines Zweirohrstoßdämpfers,
- Fig. 3: eine vergrößerte Darstellung des Bodenbereichs eines Stoßdämpfers und
- Fig. 4: eine alternative Ausbildung des Bodenbereichs gemäß Fig. 3.

Ein Zweirohrstoßdämpfer weist ein Außenrohr 1 auf. Unter Bildung eines Ringraums 2 ist zentrisch innerhalb des Außenrohrs 1 ein Zylinderrohr 3 angeordent. Das Außenrohr 1 ist mit einem Boden 4 ausgebildet. Eine Kolbenstange 5 trägt an seinem unteren Ende einen Arbeitskolben 6 und taucht mit diesem oszillierend in das Zylinderrohr 3 ein, wodurch zwei Arbeitsräume 7, 8 gebildet werden. Am offenen Ende 9 von Außenrohr 1 und/oder Zylinderrohr 3 wird die Kolbenstange abgedichtet axial geführt. Hierzu dient ein Verschluß- und Führungspaket 10. Als Ausgleichsraum für die durch die mehr oder minder weit eintauchende Kolbenstange 5 mehr oder minder verdrängte Arbeitsflüssigkeit dient ein mit kompressiblem Gas gefüllter Gasraum 11. Das Zylinderrohr 3 ist bodenseitig durch ein Bodenventil 12 verschlossen. Unterhalb des Bodenventils 12 ist eine Verbindung 13 zum Ringraum 2 angeordnet. Auch oberhalb des Verschluß- und Führungspakets 10 sind Öffnungen 14 zum Gasraum 11 hin vorgesehen, um das Schleppöl der Kolbenstange 5 abführen zu können.

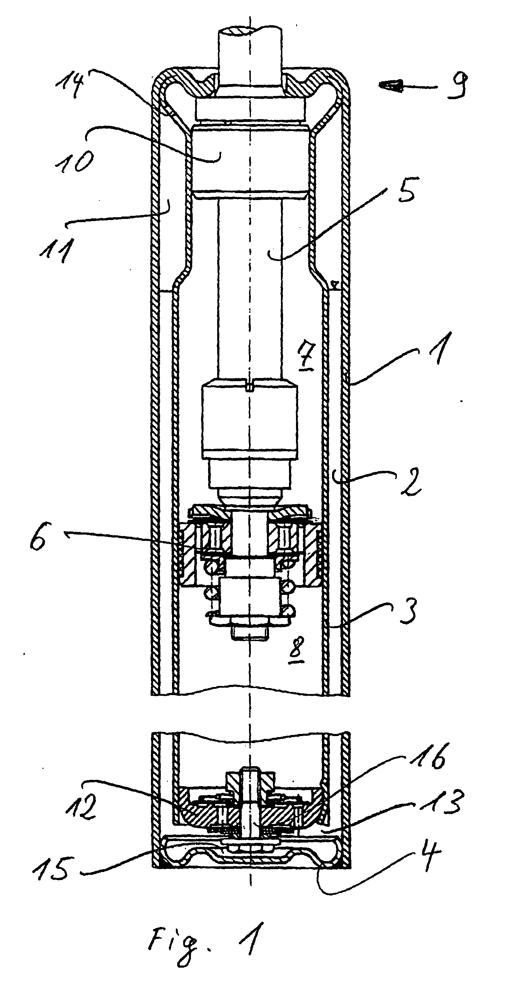

Bei der Ausbildung gemäß Fig. 1 sind die Enden von Außenrohr 1 und Zylinderrohr 3 am offenen Ende 9 miteinander verschweißt. Die so zusammengehaltenen Enden von Außenrohr 1 und Zylinderrohr 2 sind nach innen umgebördelt und dienen somit zum Fixieren des Verschluß- und Führungspakets 10. Das Bodenventil 12 ist formschlüssig über Sicken und Kerbungen am unteren Ende des Zylinderrohrs 3 befestigt. Der Boden 4 ist an seinem Außenumfang mit dem Außenrohr 1 verschweißt.

Eine Vertiefung 15 räumt dem Kopf der Einstellschraube 16 des einstellbaren Bodenventils 12 Platz ein.

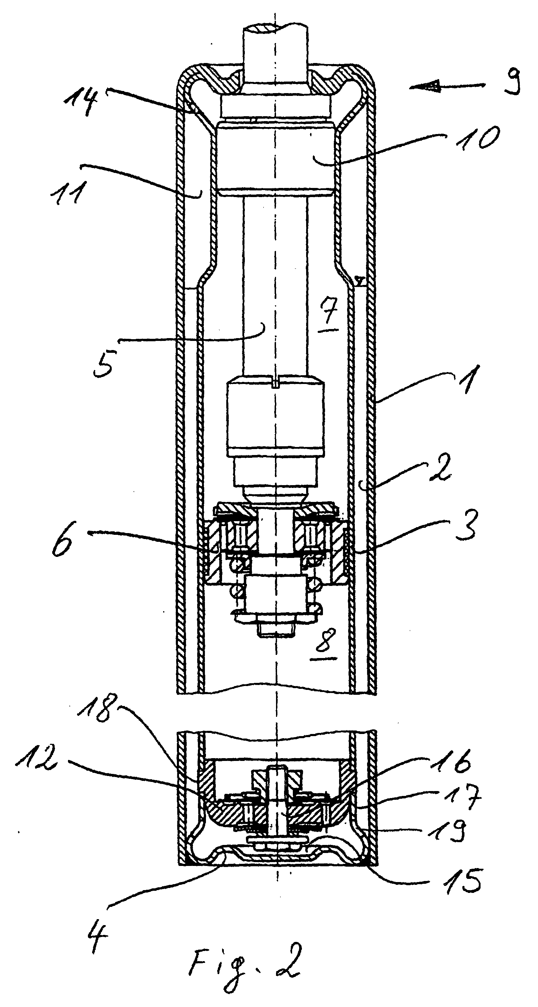

Fig. 2 zeigt eine alternative Bodenausbildung eines Stoßdämpfers gemäß Fig. 1. Hier ist der Boden 4 in gleicher Weise wie in Fig. 1 mit dem Außenrohr 1 verschweißt. Der Boden 4 setzt sich jedoch sich nach innen verjüngend als Teil 17 fort und trägt an seiner oberen Kante das Bodenventil 12, das bei dieser Ausbildung mit einem Bund 18 versehen ist. Oberhalb des Bundes 18 setzt sich das eigentliche Zylinderrohr 3 fort. Im Bereich des Überganges vom Boden 4 zum unteren Teil 17 sind Durchflußöffnungen 19 angebracht. Die Vertiefung 15 des Bodens 4 zur Aufnahme des Kopfes der Einstellschraube 16 ist ebenso ausgebildet wie in Fig. 1.

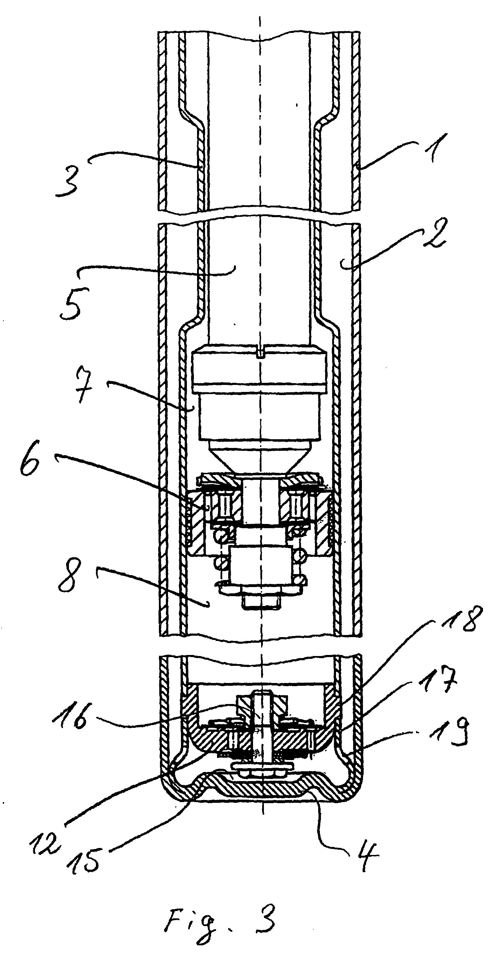

Der Zweirohrstoßdämpfer gemäß Fig. 3 ist kolbenstangeneintrittsseitig entsprechend dem bekannten Stand der Technik ausgebildet. Von daher ist nur die bodenseitige Ausbildung dargestellt. Die ursprünglich bodenseitig aneinanderliegenden Enden von Außenrohr 1 und unterem Teil 17 des Zylinderrohrs 3 werden kalt oder warm spanlos zu einem Boden 4 umgeformt, wobei sie miteinander verschweißt werden. Danach kann das Bodenventil 12, das entsprechend Fig. 2 gehalten wird, durch das offene Ende 9 des Stoßdämpfers, ebenso wie die übrigen Einbauteile, eingebracht werden. Nach dem Verschließen des Stoßdämpfers in üblicher Weise, verbunden mit dem Einbringen der Stoßdämpferflüssigkeit und des Ausdehnungsgases, ist die Montage abgeschlossen. Der Boden 4 ist entsprechend den Fig. 1 und 2 mit einer Vertiefung 15 ausgebildet.

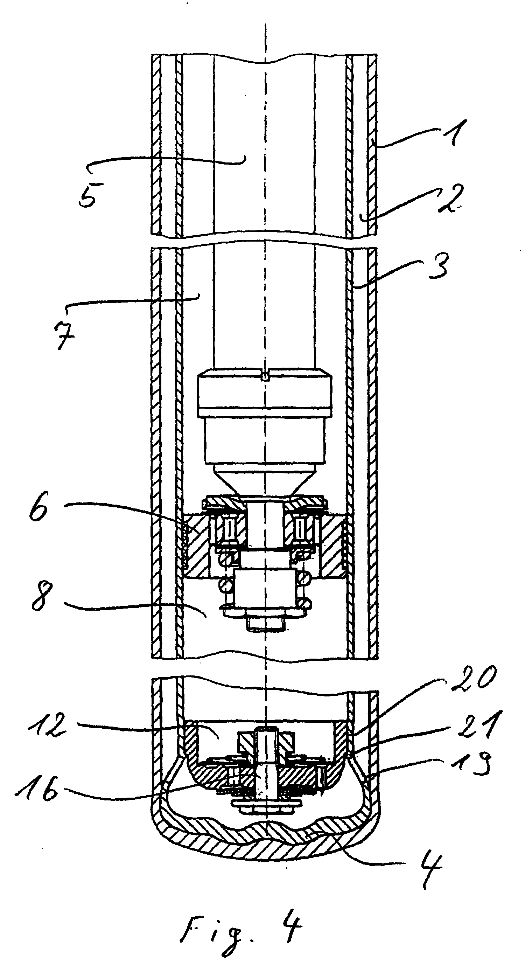

Auch der Boden 4 nach Fig. 4 ist entsprechend der vorstehenden Beschreibung zu Fig. 3 hergestellt. Im Gegensatz zu Fig. 3 ist jedoch das Zylinderrohr 3 ungeteilt hergestellt. Von daher muß das Bodenventil 12 von oben durch das Innenrohr eingeschoben werden. Zur besseren Montage ist das Zylinderrohr 3 am unteren Ende 20 geringfügig verjüngt ausgebildet. Dadurch wird erreicht, daß beim Einbringen des Bodenventils 12 keine Beschädigung an der inneren Gleitfläche des Zylinderrohrs 3 erfolgt. Am Übergang zwischen dem unteren Ende 20 des Zylinderrohrs 3 sind wiederum Durchflußöffnungen 19 angebracht. Beim Stanzen dieser Durchflußöffnungen 19 wird gleichzeitig ein Auflagerezeß 21 hergestellt, auf dem das Bodenventil 12 nach unten begrenzt aufliegt.

### Bezugszeichenliste

- 1.: Außenrohr
- 2.: Ringraum
- 3.: Zylinderrohr
- 4.: Boden
- 5.: Kolbenstange
- 6.: Arbeitskolben
- 7.: Arbeitsraum
- 8.: Arbeitsraum
- 9.: Offenes Ende
- 10.: Verschluß- und Führungspaket
- 11.: Gasraum
- 12.: Bodenventil
- 13.: Verbindung
- 14.: Öffnung
- 15.: Vertiefung
- 16.: Einstellschraube
- 17.: Teil
- 18.: Bund
- 19.: Durchflußöffnung
- 20.: Unteres Ende
- 21.: Auflagerezeß

## Patentansprüche

1. Zweirohrstoßdämpfer mit einem Zylinderrohr (3), einem dieses umgebenden Außenrohr (1) und einem an einer Kolbenstange (5) eintauchenden Arbeitskolben (6), der das Zylinderrohr (3) in zwei Arbeitsräume (7, 8) unterteilt, wobei die Kolbenstange (5) gegenüber dem Zylinderrohr (3) und/oder dem Außenrohr (1) abgedichtet geführt wird, das Außenrohr (1) am der Kolbenstangenführung gegenüberliegenden Ende einen Boden (4) aufweist, das Zylinderrohr (3) gegenüber dem Außenrohr (1) beidenends radial gehalten wird und der Ringraum (2) zwischen dem Zylinderrohr (3) und dem Außenrohr (1) einen Gasraum (11) und bodenseits eine Verbindung (13) zum dortigen Arbeitsraum (8) aufweist, wobei in letzterem vorzugsweise oberhalb der Verbindung (13) ein Bodenventil (12) angeordnet ist, **dadurch gekennzeichnet, daß** die aneinanderliegenden Enden von Außenrohr (1) und Zylinderrohr (3) bodenseitig oder an den dem Boden (4) gegenüberliegenden Enden kalt oder warm miteinander verschweißt sind.

2. Zweirohrstoßdämpfer nach Anspruch 1, **dadurch gekennzeichnet, daß** die Enden von Außenrohr (1) und Zylinderrohr (3) mit einem separaten Boden (4) verschweißt sind.

3. Zweirohrstoßdämpfer nach Anspruch 1, **dadurch gekennzeichnet, daß** die Enden von Außenrohr (1) und Zylinderrohr (3) warm oder kalt zu einem Boden (4) umgeformt sind.

4. Zweirohrstoßdämpfer nach einem oder mehreren der Ansprüche 1 bis 3, **dadurch gekennzeichnet, daß** der Boden (4) sich nach oben verjüngend mit einem zylindrischen Teil (17) geringer Höhe ausgebildet ist, das etwa den Durchmesser des Zylinderrohrs (3) aufweist und ein Bodenventil (12) trägt, hinter dem sich das Zylinderrohr (3) anschließt.

5. Zweirohrstoßdämpfer nach einem oder mehreren der Ansprüche 1 bis 4, **dadurch gekennzeichnet, daß** das Zylinderrohr (3) oberhalb der Verbindung (13)/Durchflußöffnung (19) zwischen Ringraum (2) und Arbeitsraum (8) mit sich nach innen erstreckenden Auflagerezessen (21) zum Tragen des Bodenventils (12) ausgebildet ist.

## Claims

1. Double-tube shock absorber having a cylindrical tube (3), an external tube (1) surrounding said cylindrical tube, and a working piston (6) which is inserted on a piston rod (5) and which subdivides the cylindrical tube (3) into two working chambers (7, 8), wherein the piston rod (5) is guided in a sealed manner with respect to the cylindrical tube (3) and/or the external tube (1), the external tube (1) on the end lying opposite the piston rod guide comprises a base (4), the cylindrical tube (3) is held at both ends in a radial manner with respect to the external tube (1) and the annular chamber (2) between the cylindrical tube (3) and the external tube (1) comprises a gas chamber (11) and on the base-side comprises a connection (13) to the working chamber (8) at this site, wherein a base valve (12) is disposed in said working chamber preferably above the connection (13), **characterised in that** the mutually abutting ends of the external tube (1) and the cylindrical tube (3) are welded together hot or cold on the base-side or on the ends lying opposite the base (4).

2. Double-tube shock absorber as claimed in claim 1, **characterised in that** the ends of the external tube (1) and the cylindrical tube (3) are welded to a separate base (4).

3. Double-tube shock absorber as claimed in claim 1, **characterised in that** the ends of the external tube (1) and the cylindrical tube (3) are reshaped hot or cold to form a base (4).

4. Double-tube shock absorber as claimed in any one or several of claims 1 to 3, **characterised in that** the base (4) is formed tapering towards the top with a low-height cylindrical portion (17) which comprises approximately the diameter of the cylindrical tube (3) and supports a base valve (12), downstream of which the cylindrical tube (3) is connected.

5. Double-tube shock absorber as claimed in any one or several of claims 1 to 4, **characterised in that** the cylindrical tube (3) is formed above the connection (13)/throughflow orifice (19) between the annular chamber (2) and the working chamber (8) with inwardly extending support recesses (21) to support the base valve (12).

## Revendications

1. Amortisseur bitube comprenant un cylindre de travail (3), un tube extérieur (1), qui encercle ledit cylindre de travail (3), et un piston de travail (6) monté sur une tige de piston (5), qui divise le cylindre de travail (3) en deux chambres de travail (7,8), la tige de piston (5) étant étanchée par rapport au cylindre de travail (3) et/ou au tube extérieur (1), le tube extérieur (1) présentant un fond (4), à l'extrémité opposée au guidage de la tige de piston, le cylindre de travail (3) étant fixé, dans le sens radial, aux deux extrémités, par rapport au tube extérieur (1), et l'espace annulaire (2) formé entre le cylindre de travail (3) et le tube extérieur (1), présentant un espace pour (11) un gaz et un raccord (13) qui le relie, du côté du fond, à la chambre de travail (8), une soupape de fond (12) y étant de préférence disposée, en amont du raccord (13), **caractérisé en ce que** les extrémités adjacentes du tube extérieur (1) et du cylindre de travail (3) sont soudées ensemble, à froid ou à chaud, du côté du fond ou aux extrémités opposées au fond (4).

2. Amortisseur bitube selon la revendication 1, **caractérisé en ce que** les extrémités du tube extérieur (1) et du cylindre de travail (3) sont soudées à des fonds (4) séparés.

3. Amortisseur bitube selon la revendication 1, **caractérisé en ce que** les extrémités du tube extérieur (1) et du cylindre de travail (3) sont soudées à chaud ou à froid pour former un fond (4).

4. Amortisseur bitube selon l'une ou plusieurs des revendications 1 à 3, **caractérisé en ce que** le fond (4) se rétrécit vers le haut, et est réalisé avec une partie cylindrique (17) de faible hauteur, dont le diamètre est sensiblement égal à celui du cylindre de travail (3), et porte une soupape de fond (12), en aval de laquelle se ferme le cylindre de travail (3).

5. Amortisseur bitube selon l'une ou plusieurs des revendication 1 à 4, **caractérisé en ce que** le cylindre de travail (3) présente, en amont du raccord (13)/des orifices de passage (19), entre la chambre annulaire (2) et la chambre de travail (8), des rétrécissements de contact (21) qui sont orientés vers l'intérieur et portent la soupape de fond (12).
